Europäisches Patentamt

European Patent Office

Office européen des brevets

(19)

(11) Veröffentlichungsnummer: **0 418 744 A2**

# (12) EUROPÄISCHE PATENTANMELDUNG

(21) Anmeldenummer: 90117695.8

(22) Anmeldetag: 14.09.90

(51) Int. Cl.⁵: **B60S 5/02**, B67D 5/04

(30) Priorität: 16.09.89 DE 3930981

(43) Veröffentlichungstag der Anmeldung:
27.03.91 Patentblatt 91/13

(84) Benannte Vertragsstaaten:
AT BE CH DE DK ES FR GB IT LI LU NL SE

(71) Anmelder: ETS ELEKTRONIK GmbH
Beratung + Vertrieb, Hauptstrasse 70
W-4835 Rietberg 2(DE)

(72) Erfinder: Dilley, Klaus
Lange Wiese 5
W-4800 Bielefeld 1(DE)
Erfinder: Graute, Martin
Biberstrasse 86
W-4840 Rheda-Wiedenbrück(DE)

(74) Vertreter: Meldau, Gustav, Dipl.-Ing. et al
Patentanwälte Dipl.-Ing. Gustav Meldau
Dipl.-Phys. Dr. H.-J. Strauss Postfach 2452
Vennstrasse 9
W-4830 Gütersloh 1(DE)

(54) Verfahren und Vorrichtung zum automatischen Betanken von Kraftfahrzeugen.

(57) Zur Reduzierung der Umweltbelastung beim Betanken von Fahrzeugen, zur Erhöhung von Sicherheit und Tankkomfort, sowie zur Erschwerung fehlerhafter oder rechtswidriger Betankungen werden ein Betankungsverfahren sowie eine Vorrichtung dafür angegeben, die einfach und wirtschaftlich sowohl bei Neubau als auch zum Nachrüsten von Tankstellen einsetzbar sind. Die Betankungseinrichtungen mit Fahrzeug-Fahrspur, ist mit einer Abgabeeinheit mit Pumpwerk, Durchflußzähler, mit einer der Kraftstoff sorten zugeordneten, ausziehbaren Füllschlauch mit in einer Ablage abgelegten, zur Benutzung entnehmbaren Zapfpistole und mit Erkennungsmitteln für die Tankberechtigung über eine Rechnereinheit versehen, die über die Berechtigungskennung hinaus die Fahrzeugkennung mit Angabe zur Kraftstoff-Art und zur Tankstutzen-Lage der Rechnereinheit mitgeteilt und an die Abgabeeinheit weitergeleitet wird. Danach nimmt der Manipulator dieser Abgabeeinheit die als Füllkopf ausgebildete Zapfpistole aus ihrer Ablage auf, bringt diese in eine der Lage des Tankstutzens entsprechende Lage und führt diese in den mit einem öffenbaren Verschluß versehenen Tankstutzen ein, worauf die Abgabeeinheit das Betankungsventils öffnet; nach Füllung des Tankes erhält die Abgabeeinheit ein die Kraftstoffzufuhr beendendes Signal, das seinerseits die rückläufige Bewegung des Manipulators auslöst, worauf der Manipulator den Füllkopf aus dem Tankstutzen entnimmt, in Ausgangslage zurückverbringt und in der Ablage ablegt und selbst in Ruhelage zurückkehrt.

Fig. 1

# VERFAHREN UND VORRICHTUNG ZUM AUTOMATISCHEN BETANKEN VON KRAFTFAHRZEUGEN

Die Erfindung betrifft ein Verfahren zur Betankung von grobpositioniert auf der Fahrspur einer Betankungsanlage befüllungsgerecht abgestellten Fahrzeugen, wobei die Betankungsanlage für jede vorrätige Kraftstoffsorte mindestens eine Abgabeeinheit mit einen für diese Kraftstoffsorte bestimmten Füllschlauch mit angeschlossener, in einer Ablage abgelegter, zur Benutzung entnehmbarer Zapfpistole aufweist und mit Mitteln zum Erkennen zumindest der Tankberechtigung versehen und an eine Rechnereinheit angeschlossen ist; sie betrifft darüber hinaus eine Vorrichtung zum Betanken von Fahrzeugen nach diesem Verfahren, mittels einer mit mindestens einem Vorratstank für jede vorrätig gehaltene Kraftstoffsorte versehenen Betankungseinrichtung mit mindestens einer Abgabestelle für jede Kraftstoffsorte mit Pumpwerk, Durchflußzähler und einem mit einer Zapfpistole abge schlossenen Zapfschlauch, wobei der Zapfschlauch zur Benutzung ausziehbar und die nicht benutzte Zapfpistole in einer Ablage abgelegt ist und daraus zur Benutzung entnehmbar ist, wobei die Betankungsanlage mindestens eine Fahrspur für das zu betankende Fahrzeug sowie mindestens eine Abgabeeinheit an der/den Fahrspur/-en aufweist und wobei an der Betankungseinrichtung Mittel zur Aufnahme von Kundendaten vorgesehen sind.

Bei der Einrichtung von Tankstellen als Betankungsanlagen für Kraftfahrzeuge wird regelmäßig die Bevorratung verschiedener Kraftstoffe vorgesehen, die 0ft über mehrere Abgabeeinheiten abgegeben werden. Diese Abgabeeinheiten weisen für jede von ihnen abgegebene Kraftstoffsorte elektrisch angetriebene Pumpen auf, die über Saugleitungen mit den in aller Regel unterirdisch angelegten Vorratstanks in Verbindung stehen. Der Pumpenausgang ist mit dem dieser Kraftstoffsorte zugeordneten Füllschlauch verbunden, wobei ein zwischengeschalteter Durchflußzähler die entnommene Kraftstoffmenge erfaßt und sowohl an ein Anzeigetableau als auch an eine zentrale Erfassungsstelle - z.B. die Kasse - weiterleitet. Zur bargeldlosen Abrechnung wird ein Eingabeterminal im Bereich der Tankstelle vorgesehen, das mit einem Magnetkartenleser als Mittel zum Erkennen der Tankberechtigung versehen ist, und das ein Tastenfeld zur Eingabe der geheimen persönlichen Kennziffer sowie zur Auswahl der für die Betankung gewünschten Abgabeeinheit aufweist, wobei das Fahrzeug vorher in Reichweite des ausziehbaren Füllschlauches betankungsgerecht abgestellt worden ist. Nach dem Einlesen der Magnetstreifenkarte und nach Eingabe der Kennziffer und der ausgewählten Abgabeeinheit wird diese aktiviert, der Betankungsvorgang kann nach Entnahme der gewünschten Kraftstoffsorte zugeordneten Zapfpistole mit dem Einführen des Zapfpistolenauslaufs in den Tankstutzen und Öffnen des Ventils eingeleitet werden. Mit der Entnahme des gewünschten Füllkopfes wird die der ausgewählten Kraftstoffsorte zugeordneten Kraftstoff-Förderpumpe eingeschaltet und das Zählwerk auf "Null" gestellt; nach Einführen der Zapfpistole in den Tankstutzen des Fahrzeugs kann das Zapfventil geöffnet werden und der Kraftstoff beginnt in den Fahrzeugtank zu fließen.

Sofern nicht eine geringere Kraftstoffmenge gewünscht wird, wird die Betankung abgebrochen, wenn der Füllstand des Kraftstoffes im Fahrzeugtank den im allgemeinen als Saugfühler ausgebildeten Füllstandssensor erreicht hat, der Füllkopf wird entnommen und in seine Ablage zurückgelegt. Mit dem Ansprechen des Füllstandssensors schließt das Zapfventil und mit Einlegen der Zapfpistole in die Ablage wird die Kraftstoff-Förderpumpe stillgelegt sowie die Datenübermittlung vollzogen. Dieses Verfahren setzt voraus, daß der die Betankung durchführende Kraftfahrer selbst den Betankungsvorgang überwacht und steuert. Dies ist jedoch nur dann möglich, wenn der Kraftfahrer das Betankungssystem kennt. Darüber hinaus ist es auch bei noch so großer Sorgfalt nie ganz zu vermeiden, daß Kraftstoff -etwa der Rest aus dem Füllrüssel des Füllkopfes oder bei dem Versuch, den Füllstandssensor zu überlisten um den Tank bis zu der Oberkante des Tankstutzen füllen zu können - überläuft und ebenso wie bei der Betankung ausströmender Gase zu einer Belastung der Umwelt führt.

Hier setzt die Erfindung ein, der die Aufgabe zugrundeliegt, das Betankungsverfahren so weiterzubilden, daß Umweltbelastungen reduziert und Sicherheit und Tankkomfort erhöht sowie Fehltankungen und rechtswidrige Betankungen zumindest erheblich erschwert werden; darüber hinaus soll eine Vorrichtung angegeben werden, mit deren Hilfe das Verfahren in einfacher Weise durchführbar ist, und die einfach und wirtschaftlich sowohl für Tankstellen-Neubauten als auch zum Nachrüsten bestehender Tankstellen einsetzbar ist.

Diese Aufgabe wird hinsichtlich des Verfahrens dadurch gelöst, daß der Betankungsanlage über die Berechtigungskennung des Tankenden hinaus die Fahrzeugkennung mit mindesten Angabe zur Art des gewünsch ten Kraftstoffes und zur Lage des Tankstutzens der Rechnereinheit und mit der Fahrzeugkennung auch Angaben zur Berechtigung des Tankenden an die Rechnereinheit übermittelt, die diese prüft und nach positivem Befund die Betankung über die Abgabeeinheit frei gibt, und die die Tankabrechnung erstellt und vorzugsweise durch Fernübertragung einer zentralen Abrechnungsstelle übermittelt, daß danach ein an diese Abgabeeinheit angeschlossener Manipulator mit schwenkbarem Gelenkarm aus einer Ruhelage heraus die für die Betankung mit dem geforderten Kraftstoff bestimmte, als Füllkopf ausgebildete Zapfpistole aus ihrer Ablage aufnimmt, in eine der Lage des Tankstutzens entsprechende Lage verbringt und in den mit einem öffenbaren Verschluß versehenen Tankstutzen einführt, worauf die Abgabeeinheit ein Signal zum Öffnen des Betankungsventils erhält, daß nach Füllung des Tankes die Abgabeeinheit ein die Kraftstoffzufuhr beendendes Signal erhält, das seinerseits die rückläufige Bewegung des Manipulators auslöst, worauf der Manipulator den Füllkopf aus dem Tankstutzen entnimmt, in Ausgangslage zurückverbringt und in der ihr zugeordneten Ablage ablegt und selbst in Ruhelage zurückkehrt, daß die Betankung nach einem einstellbaren Zeitintervall abgebrochen wird, wenn die Zapfpistole nicht in den Tank-stutzen eingeführt werden kann, der Kraftstoff-Fluß nicht einsetzt oder eine sonstige Störung von der Abgabeeinheit erkannt wird; sie wird hinsichtlich der Vorrichtung gelöst durch einen neben der Fahrspur der Abgabestation vorzugsweise parallel zur Fahrspur verfahrbar angeordneten Manipulator mit einen zumindest zweiteiligen, faltbaren, im ausgefalteten Zustand ausladenden Manipulatorarm, der zumindest um eine Vertikalachse schwenkbar auf den Manipulator aufgesetzt ist und dessen Armteile um horizontale Schwenkachsen schwenkbar an die mit dem Manipulator zusammenwirkende Grundplatte bzw. aneinander gelenkt sind, wobei die Schwenkgelenke mit Antriebsmotoren versehen sind, ein Greifelement, das an das freie Ende des endständigen Armteils, um eine etwa in Richtung dessen Achse weisende Schwenkachse schwenkbar angelenkt ist, und das an seinem freien Ende mit Mitteln zum Greifen und Auf nehmen einer der als Füllkopf ausgebildeten Zapfpistolen aus einer Ablage versehen ist, wobei zumindest die Mittel zum Ergreifen des Füllkopfes mit einem Antrieb versehen sind. Vorteilhafte Weiterbildungen und bevorzugte Ausführungsformen werden von den Unteransprüchen 2 bis 5 sowie 7 bis 20 beschrieben.

Mit dem vorgeschlagenen Verfahren wird eine automatische Betankung von Kraftfahrzeugen erreicht, die von ihrer Natur her schon menschliche Fehler ausschließt. Dabei wird über die Berechtigungskennung der Betankungsanlage neben der benötigten Kraftstoffsorte auch die Lage des Tankstutzens mitgeteilt, wobei es auf die Art der Übermittlung ebensowenig ankommt, wie auf die Form der Information oder deren weitere Inhalte. So kann der benötigte Kraftstoff direkt angegeben sein, er kann aber auch indirekt der Typenbezeichnung des Kraftfahrzeugs durch Vergleich mit einer in der Rechnereinheit gespeicherten Konkordanzliste entnommen werden. Gleiches gilt für die Lage des Tankstutzens, die in Form von Koordinaten, die auf die betankungsgerechte Positionierung des Fahrzeugs bezogen sind, direkt mit der Fahrzeugkennungl oder die indirekt in der Typenangabe in der Fahrzeugkennung verborgen von der Rechnereinheit aus einer eingegebenen Konkordanzliste ermittelt werden. Aufgrund dieser Übermittlung kann der Manipulator den für den benötigten Kraftstoff bestimmten Füllkopf aus der Ablage aufnehmen und in die für den Tankstutzen des zu betankenden Fahrzeugs richtige Position bringen. Dabei wird von einem betankungsgerecht abgestellten Fahrzeug ausgegangen. Dieses Abstellen wird durch einfache Signalmittel wie Schweller, Induktionsschleifen mit Haltesignal oder ähnliche Mittel erreicht. Der so positionierte Füllkopf kann nun von dem Manipulator in den Tankstutzen eingeführt werden, wobei die Rückmeldung für die Einführung den Befüllvorgang auslöst. Diese Rückmeldung wird dadurch gewonnen, daß der für automatische Betankung besonders ausgebildete Füllkopf einen Fühler enthält, der beim Einführen in den Tankstutzen ausgelöst wird und der die Rückmeldung bewirkt. Der Füllkopf selbst weist einen Füllstandssensor auf, der beispielsweise in bekannter Weise als bei vollem Tank auf Verschluß durch den Kraftstoff reagierendes Saugrohr ausgebildet sein kann. Wird dieses "Voll"-Signal ausgelöst, wird der Manipulator wiederum aktiviert, diesmal allerdings so, daß die Bewegungen umgekehrt ablaufen bis der Füllkopf abgelegt und der Manipulatorarm in Ruhelage sind.

Vorteilhaft ist es, wenn die Grobpositionierung des zu betankenden Fahrzeugs von der Abgabeeinheit her überwacht werden kann. Hierzu wird ein erster Fernsensor an der Abgabeeinheit vorgesehen, die die Außenwand der Karosserie überprüfen kann, und der dabei mit optischen oder mit akustischen Mitteln arbeiten kann und neben der Entfernung der Karosseriefläche auch prüft, ob diese Fläche zumindest im Bereich üblicher Tankstutzenpositionen eine geschlossene Fläche ist, oder ob die Fläche Unterbrechungen, die als geöffnete Tankklappe zu interpretieren sind, aufweist. Ist zusätzlich eine für diesen Fernsensor erkennbare Fahrzeugkennung im Tankstutzenbereich vorgesehen, kann diese von dem ersten Fernsensor erkannt und der Rechnereinheit weitergeleitet werden; weiter kann mit diesem sowohl die Grobpositionierung des zu betankenden Fahrzeugs überwacht werden, als auch -wenn das Fahrzeug entsprechend ausgerüstet ist- dessen für das Betanken typischen Werte. Für ein so ausgerüstetes Fahrzeug ist es ausreichend, wenn der Fahrer das Fahrzeug in die Grobposition fährt, es dort abstellt und die Tankklappe öffnet; alles andere besorgt die Automatik.

Eine andere vorteilhaft Weiterbildung ist dann gegeben, wenn an dem Ende des Manipulatorarmes, des Greifelementes oder des Füllkopfes ein Nahfeldsensor vorgesehen ist, der bei Annäherung des Füllkopfes an den Tankstutzen dort vorgesehene aktive oder passive Signalmittel erkennt und aufgrund dieses Erkennens die Feinpositionierung des Manipulatorarmes durch das Auslösen entsprechender, mögliche Stellungsfehler korrigierende Steuersignale bewirkt. Dabei können auch fahrzeugtypische Kennungswerte mit ausgetauscht werden, so daß neben der Feinpositionierung auch eine Kontrolle z.B. der Eingabe der benötigten Kraftstoffsorte möglich ist, um z.B. die Fehlbetankungen eines Fahrzeugs mit einem Dieselmotor mit die Selbstzündung unterdrückenden Supertreibstoff auszuschließen.

Um den Tankvorgang bei ungewollter Fahrzeugbewegung unverzüglich abbrechen zu können, werden die auf den Manipulatorarm wirkenden Kräfte über das bei z.B. einem Anrollen auf den Manipulatorarm übertragene Kraftmoment überwacht, wobei bei Überschreitung eines einstellbaren Grenzwertes der Betankungsvorgang abgebrochen und der Manipulatorarm zurückgefahren wird. Gleiches gilt auch für Vertikalbewegungen etwa durch ein Wippen des Fahrzeugs.

Zur Vermeidung eines Austretens von mit Kraftstoff gesättigten Gases aus dem Fahrzeugtank beim Einfüllen des Kraftstoffes erlaubt die automatische Betankung wegen der Notwendigkeit des dichten Aufsetzens des Füllkopfes auf den Tankstutzen die Anwendung der Gas-Pendelung. Hierbei wird das aus dem Fahrzeugtank beim Einfüllen des Kraftstoffes verdrängte Gas über eine Ausgleichsleitung dem Vorratstank, aus dem dieser Kraftstoff entnommen wurde zugeführt. Abgesehen von Temperaturunterschieden bedingten Unterschieden der Volumina entspricht das Volumen des verdrängten Gases demjenigen, das zur Vermeidung einer Unterdruckbildung dem Vorratstank zuzuführen ist. Die Nachteile einer mit einer Erhöhung der Gasmenge verbundenen Absaugung werden vermieden.

Zu den sicherheitsrelevanten Merkmalen des Verfahrens gehören der Abbruch des ausgelösten Betankungsvorganges, wenn innerhalb eines einstellbaren Zeitintervalles störungsbedingt beispielsweise der Füllrüssel des Füllkopfes nicht in den Tankstutzen eingeführt werden kann, der Kraftstoff-Fluß nicht einsetzt oder ähnliche Störungen auftreten. Gleiches gilt im Grundsatz auch für den Ausfall der An triebsenergie, im Regelfall des Ausfalles der elektrischen Netzversorgung. Hier setzt eine Notversorgung ein, z.B. über an sich bekannte, im Normalbetrieb über das Netz gepufferte Notstrombatterien, deren Kapazität allerdings lediglich so ausgelegt zu sein muß, daß die Rückführung des Manipulatorarmes (ggf. der Manipulatorarme) bei einem Abbruch der Betankung sichergestellt ist. Dabei können zusätzliche "Rückführungsenergien" z.B. in Form von beim Ausfahren des Armes aufgebauter Energie der Lage (etwa durch Anheben von Gewichten) oder in Form von beim Ausfahren des Armes in einer Feder gespeicherter Federenergie die rückläufige Bewegung des Manipulatorarmes unterstützen. Ein anderer sicherheitsrelevanter Vorteil kann mit dem ersten, an der Abgabeeinheit vorgesehenen Fernsensor erreicht werden: Dieser wird über seine Aufgabe, die Wandung der Karosserie zu erkennen, auch als Mittel zum Erkennen von im durch den Bewegungsbereich des Manipulatorarmes gegebenen Sicherheitsbereich vorhandenen bzw. in diesen eindringenden Fremdkörpern eingesetzt. Beim Erkennen derartiger Fremdkörper setzt dieser erste Fernsensor als Umgebungssensor zumindest die Armantriebe still.

Die Vorrichtung zum automatischen Betanken geht aus von herkömmlichen Tankstellen, bei denen die Betankungsanlage eine oder mehrere Abgabestellen aufweist, auch für unterschiedliche Kraftstoffsorten. Jede Abgabeeinheit ist mit mindestens einem Zapfschlauch versehen, an dessen Ende eine Zapfpistole sitzt, die in einer Ablage vorrätig gehalten wird und die zum Betanken entnommen werden kann. Der Zapfschlauch ist bis zum Zapfpistolen-Ventil mit Kraftstoff gefüllt. Um die Zufuhr des Kraftstoffs sicherzustellen, ist jede Abgabeeinheit für jeden Kraftstoff über eine Saugleitung mit dem vorzugsweise unterirdisch angeordneten Vorratstank verbunden, sie weist für jeden Kraftstoff eine bei der Entnahme der Zapfpistole anspringende Kraftstoff-Förderpumpe auf und einen mit einem Anzeige- und Rechenwerk versehenen Durchflußmesser zur Anzeige und zur Abrechnung des getankten Kraftstoffes. Das Ausgangssignal des Durchflußmessers wird auch fernübertragen, z. B. in das entfernt von der Abgabeeinheit aufgestellte Kassenhaus. Bei unbarer Kraftstoffabgabe sind Mittel zur Aufnahme der Kundendaten vorgesehen, z. B. in Form eines Magnet-oder Hybrid- oder sonstigen -kartenlesers. In üblicher Weise ist dann die Betankung von der Tankberechtigung der gelesenen Karte abhängig und zusätzlich von der korrekten Eingabe der geheimen Personenidentif ikationsnummer. Das auf der zur Abgabeeinheit führenden Fahrspur stehende Fahrzeug steht dabei in aller Regel so, daß der Tankstutzen mit dem ausziehbaren Schlauch erreichbar ist. Zur automatischen Betankung wird neben der Fahrspur ein Manipulator angeordnet, der die als Füllkopf ausgebildete Zapfpistole für die gewünschte Kraftstoffsorte aus der Ablage entnimmt und aufgrund der mit der Fahrzeugkennung übermittelten oder mit dem ersten Fernsensor erkannten Lage des Tankstutzens dadurch zum Tankstutzen bringtl daß die Manipulatorarme gegenüber dem Manipulatorfuß um eine vertikale Achse verschwenkbar sind und die Anlenkung des Manipulatorarmes an diesen Fuß und der Armteile untereinander sowie ggfs. auch des Greifelements an das freie Ende des letzten Armes um horizontale Achsen schwenkbar aneinandergelenkt sind. Damit entsteht ein vom Füllkopf erreichbarer Bereich, der sich im wesentlichen in einer Vertikalebene parallel zur Fahrspur erstreckt, und der auch eine gewisse räumliche Tiefe beidseits dieser Ebene mit erfassen kann. Dabei erfaßt das Greifelement den Füllkopf mit einer im wesentlichen formschlüssig fassenden Aufnahme und kann so, den in üblicher Weise ausziehbaren Schlauch hinter sich herziehend, die gewünschte Position erreichen. Die notwendige Starrheit der Verbindung wird durch mechanische Mittel, z.B. Haltenocken oder Rastnokken hergestellt, wobei die Haltenocken ferngesteuert gesetzt oder gelöst werden. Bei den Rastverbindungen genügt eine ferngesteuerte Bewegung, z.B. ein ferngesteuertes Lösen. In der gewünschten Position wird der Füllkopf in den Tankstutzen eingeführt und nach Einführung des Füllkopfes in den Tankstutzen beginnt der Betankungsvorgang fernausgelöst. Ist eine vorgegebene Menge Kraftstoff erreicht oder meldet der Füllstands sensor am Auslaufende des Rüssels des Füllkopfes, daß der Tank voll ist, wird der Tankvorgang unterbrochen, der Manipulatorarm in Ruhestellung geführt und der Füllkopf wieder in seiner Ablage abgelegt.

Vorteilhaft ist es, wenn der Manipulator neben der Fahrspur parallel zu dieser verfahrbar ist. Weiterhin ist vorteilhaft, wenn das Greifelement besonders zum Einführen des Füllkopfes in den Tankstutzen längsverschieblich und/oder drehbar ausgebildet ist.

Als Mittel zur Aufnahme der Berechtigungs- bzw. der Fahrer- und Fahrzeugkennung wird vorteilhafterweise eine Konsole vorgesehen, die neben der Fahrspur angeordnet ist, und zwar in einer Position, die ein betankungsgerechtes Abstellen des Fahrzeugs sichert, wenn der Fahrer durch das fahrertürseitige Fenster die Eingabekonsole erreicht. Andere Möglichkeiten der Sicherung dieser Stellung können Schwellen in der Fahrspur, Induktionsschleifen, Lichtschranken o. dgl. sein. Ist das Fahrzeug in dieser "betankungsgerechten" Position, hängt die Relativ-Lage der Tankstutzenöffnung gegenüber z. B. der Vertikalachse des Manipulators nur vom Fahrzeugtyp ab und -da dieser mit der Kennung übermittelt- kann die Zapfpistole vom Manipulatorarm mit seinem Bewegungsmechanismus ohne weiteres in die für dieses Fahrzeug notwendige Position gebracht werden.

Eine andere Möglichkeit, den Bewegungsmechanismus so zu steuern, daß die Greifpistole in die Tankstutzen-Position gebracht wird, besteht darin, daß der Manipulator selbst einen ersten Fernsensor aufweist, der die Außenseite des betankungsgerecht abgestellten Kraftfahrzeugs überprüft, zumindest im Bereich üblicher Tankstutzen-Positionen und der erkennt, ob die Karosserie-Außenhaut in diesem Bereich ungestört ist oder eine Unterbrechung durch die geöffnete, den Tankstutzen ansonsten verschließende Kappe vorhanden ist. Der erste mit einem optischen oder einem akustischen Geber zusammenarbeitende Fernsensor erfaßt die vom Geber ausgestrahlten und von der Karosserie - Ober fläche zurückgeworfenen Signale, wobei die Möglichkeit besteht, aus Laufzeit- oder Phasenunterschieden genauere Informationen über Abstand und/oder Position der Öffnung des Tankstutzens zu erhalten. Aufgrund der so gewonnenen Lage-Koordinaten können die Stellantriebe den Manipulatorarm in die gewünschte Position bringen, wobei auch im Bereich des Tankstutzens vorhandene Kennungen erfaßt und gelesen werden können.

Dazu besitzt das Greifelement oder der Füllkopf einen zweiten Nahfeldsensor sowie einen dazu gehörenden Geber, wobei beide akustisch oder optisch arbeiten. Bei akustischer Abtastung einer vorhandenen Kennung werden unterschiedliche Reflektionen bzw. Laufzeiten ausgewertet, bei optischer Kennung im allgemeinen Hell-/Dunkelunterschiede, z. B. in Form der bekannten Strich-Code-Kennungen. Die dazu notwendige Bewegung des Lichtstrahls kann in einfacher Weise von einem Drehspiegel oder einem Schwingspiegel oder auch von einem Schwingen oder Schwenken des Gebers oder des Nahfeldsensors selbst herrühren. Während Geber und Empfänger des ersten Fernsensors in Art einer Weitwinkel-Anordnung große Flächenbereiche erfassen, sind Geber und Empfänger des zweiten Nahfeldsensors auf einen Engwinkelbereich abgestellt.

Besonders vorteilhaft ist es, wenn Fahrzeug und Betankungsvorrichtung mit einer Einrichtung zur drahtlosen Kennungsübertragung versehen sind. Mit fortschreitender Elektronisierung der Fahrzeuge können dann bei jedem Tankvorgang eine Menge von Parametern zusätzlich überprüft werden. Werden z. B. Kilometerstände mit übertragen und ist vorgesehen, die gefahrenen Kilometer seit der letzten Betankung anzugeben, kann ein Verbrauchsmaß in Litern/100 Kilometern angegeben werden. Darüber hinaus kann geprüft werden, ob die technischen Funktionen normal sind, ob Inspektionsintervalle eingehalten wurden u. dgl. Die für den Fahrer relevanten Informationen können dann auf einem Tableau angezeigt werden, sie können aber auch, wenn das Fahr zeug mit einem Bordcomputer versehen ist, über diesen z. B. auf seinem Display zur Anzeige kommen.

Zum Antrieb des Manipulatorarmes werden vorteilhaft Elektromotoren, insbesondere genau positionierbare Stellmotoren oder aber Hydraulikmotoren eingesetzt. Bei letzteren kann die Positionierung durch die Dosierung der zur Antriebsverstellung notwendigen Menge an Hydraulikflüssigkeit erreicht werden. Die Antriebsmotoren wirken über Getriebe auf die Gelenke, wobei die Getriebe vorteilhaft selbsthemmend z. B. als Schneckengetriebe ausgebildet sind. Durch diese Selbsthemmung ist der in Position gebrachte Manipulatorarm in sioh steif, so daß Fahrzeugbewegungen, z. B. ein Anrollen oder ein Wippen zu Kraftmomenten führen müssen, die über Sensoren erfaßbar sind, die ihrerseits den Tankvorgang abbrechen, so daß der Manipulatorarm in Ruhestellung zurückgefahren wird.

Das Greifelement selbst ist mit einer Aufnahme versehen, die auf das "Griffstück" des Füllkopfes abgestellt mit diesem formschlüssig zusammenwirkt. Bei dem Aufnehmen des Füllkopfes wird dieser Formschluß hergestellt und durch eine mechanische Rastverbindung gesichert. Nach der Sicherung kann der Füllkopf seiner Ablage entnommen werden, wobei durch dieses Entnehmen in üblicher Weise die Kraftstoffpumpe aktiviert wird. Das in dem Füllkopf vorhandene Füllventil kann dabei nur über Ferneinwirkung geöffnet werden. Vorteilhaft wird.dieses Ventil als Magnetventil ausgeführt, das durch Stromfluß aktiviert in "Offen"-Stellung übergeht. Durch diese Ausbildung ist es ausgeschlossen, daß bei Stromausfall das Füllventil offen bleibt. Das elekromagnetische Öffnen des Füllventils kann nur dann vorgenommen werden, wenn der Füllkopf von dem Greifelement aufgenommen und in den Tankstutzen eingeführt ist. Ersteres kann beispielsweise dadurch realisiert werden, daß die Rastverbindung einen in den Stromkreis des Magnetventils eingeschalteten Schalter bei Verrastung schließt. Letzteres kann dadurch verwirklicht werden, daß die beim Aufsetzen des Füllkopfes auf den Tankstutzen entstehende rückwirkende Kraft von einem in dem Füllkopf vorgesehenen Druckschalter aufgenommen wird, der nur dann den Stromkreis des Magnetventiles schließt, wenn die an ihm auftretende Kraft eine voreingestellte Größe überschreitet. Diese Rückwirkung ist möglich, weil der Füllkopf zum einen wegen der Anwendung der Pendelluft dicht auf den Tankstutzen aufgesetzt wird und dazu eine gewisse Kraft aufzuwenden ist und zum anderen, weil auch zum Entriegeln der im Tankstutzen oder an einen in den Tankstutzen eingesetzten Tank-Adapter vorhandene innere Verschlußklappe über die Kraft, mit der der Füllkopf aufgesetzt wird, entriegelt und die Rückwirkung dieser Kraft zum Schließen des Druckschalters verwendet wird.

Das Wesen der Erfindung wird anhand der beigefügten Figuren 1 bis 11 näher erläutert, die beispielhaft einige Ausführungsformen zeigen; dabei zeigen:

Fig. 1: Schematische Aufsicht auf automatische Betankungsanlage,

Fig. 2: Schematische Ansicht der Betankungsanlage, Blick in Richtung der Fahrspur,

Fig. 3: Ansicht der Abgabeeinheit mit manueller und automatischer Kraftstoffabgabe,

Fig. 4: Ansicht der Bedienstation,

Fig. 5: Einzelheit Heck des zu betankenden Kraftfahrzeuges angeschlossen an das automatische Abgabeteil,

Fig. 6: Einzelheit Ankopplung des Füllkopfes der automatischen Abgabeeinheit an den Tankstutzen des Kraftfahrzeuges, Aufsicht,

Fig. 7: Einzelheit Ankopplung des Füllkopfes der automatischen Abgabeeinheit an den Tankstutzen des Kraftfahrzeuges, Seitsicht,

Fig. 8: Tankstutzen-Adapter,

Fig. 9: Tankstutzen mit Tankstutzen-Adapter,

Fig. 10: Greifelement im Zusammenwirken mit dem Füllkopf,

Fig. 11: Verfahrensablauf in Schemadarstellung.

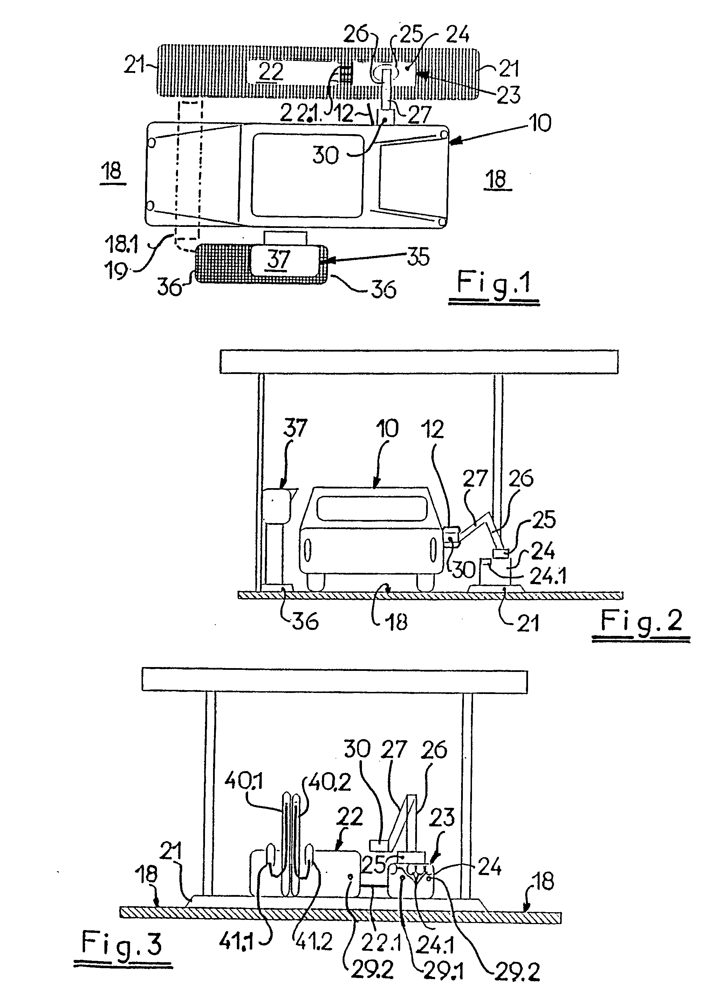

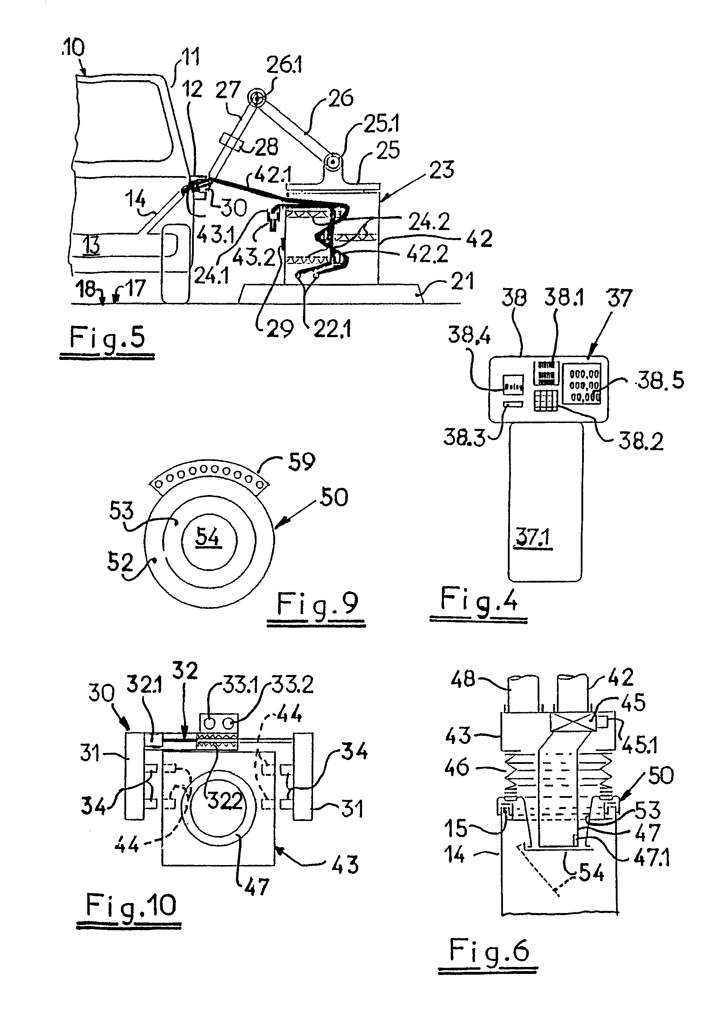

In den Figuren 1 bis 3 ist schematisch die Situation an einer für automatische Betankung eingerichteten Betankungsanlage dargestellt: Zwischen den mit der Abgabeeinheit 23 und mit der Bedieneinheit 35 versehenen Inseln 21 und 36 befindet sich die Fahrspur 18 auf der das Kraftfahrzeug 10 betankungsgerecht abgestellt ist. Zum Abstellen in dieser relativ genauen Lage ist in die Fahrspur 18 eine Induktionsschleife 19 eingelassen, die bei Erreichen der Bedieneinheit ein Signal zuleitet, das am Anzeigedisplay 38.1 der Bedieneinheit eine Anzeige "STOP" o.dgl. auslöst. In ähnlicher Weise wird das Kraftfahrzeug in etwa richtige Position gestellt, wenn der Fahrer des Kraftfahrzeuges 10 die zur Bedienung der Bedieneinheit 35 notwendigen Elemente durch das fahrerseitige Fenster des Kraftfahrzeuges 10 erreichen kann. Es versteht sich von selbst, daß jede andere Art der Positionierung -z.B. Lichtschranken, Druckschalter oder sogar mechanische Schwellen- in gleicher Weise und mit gleichem Erfolg eingesetzt werden können. Auf der abgabeseitigen Insel 21 befinden sich die Naßeinheit 22, die die Pumpenwerke und die Durchflußzähler enthält, und die mit der die Anlage steuernden Bedieneinheit in Wirkverbindung steht, sowie die eigentliche Abgabeeinheit 23. die über Verbindungsleitungen 22.1 mit der Naßeinheit 22 verbunden ist, durch diese Verbindungsleitungen 22.1 werden die Kraftstoffsorten den Füllschläuchen, von denen die Abgabeeinheit mindestens für jede Kraftstoffsorte einen besitzt, zugeleitet. Auf dem Gehäuse 24 der Abgabeeinheit 23 ist ein Manipulatorarm mit den Armteilen 26 und 27 aufgesetzt, wobei der Manipulatorarm auf einem Drehteller 25 angeordnet ist. Das Gehäuse der Abgabeeinheit 23 weist schließlich noch Ablagen 24.1 für die (der Übersichtlichkeit halber hier nicht näher dargestellten) Füllköpfe 43 der Füllschläuche 42 auf, wobei jeder Kraftstoffsorte eine der Ablagen zugeordnet ist. In der Figur 3 ist zusätzlich dargestellt, daß die Naßeinheit auch noch mit konventionellen, zur manuellen Betankung -hier lediglich für zwei Kraftstoffsorten dargestellt - vorgesehenen Füllschläuchen 40.1 und 40.2 mit den üblichen Zapfpistolen 41.1 und 41.2 ausgestattet sein kann. Durch diese Maßnahme wird die Betankung auch solcher Kraftfahrzeuge möglich, die -etwa wegen nicht dafür geeigneter Ausbildung oder wegen der Lage des Tankstutzens- manuell zu betanken sind.

Die Figur 4 zeigt die Ansicht der Bedieneinheit 37 von der Fahrspur 18 aus. Auf dem Unterschrank 37.1, der die zum Empfang und zur Abgabe elektronischer Signale sowie zu deren Umsetzung notwendigen Einrichtungen enthält, befindet sich der Bedienkopf 38 mit dem zur Bedienung der Anlage vom Fahrersitz aus notwendigen Einrichtungen. Die dem Fahrer zu übermittelnden Informationen werden am Anzeigedisplay 38.1 angezeigt, das Tastenfeld 38.2 erlaubt dem Fahrer die notwendigen Eingaben insbesondere seiner persönlichen Indifikationsnummer"PIN". Der Aufnahmeschlitz 38.3 erlaubt die Eingabe der zu lesenden Karte, wobei ein Leser für Magnet-, Hybrid oder sonstige Karten den Informationsinhalt der eingegebenen Karte übernimmt. Ein Rechner zeigt auf seinem Rechnertableau 38.4 neben Kraftstoffsorte auch abgegene Menge, Abgabepreis sowie den Liter-Preis an und ein in der Bedieneinheit vorgesehener Belegdrukker 38.4 druckt und gibt auf Wunsch einen Beleg aus. Schließlich kann eine Wechselsprechanlage für einen direkten Informationsaustausch mit dem Anlagenpersonal vorgesehen sein. Durch diese Ausbildung wird es möglich, daßder Fahrer den gesamten Tankvorgang vom Fahrersitz aus steuern kann, ein Aussteigen entfällt.

Die Figur 5 zeigt eine teilweise geschnittene Heckansicht des zu betankenden Kraftfahrzeugs 10, das an die Abgabeeinheit 23 angekoppelt ist. In dem Untergehäuse 24 der Abgabeeinheit 23 sind die für jede der Kraftstoffsorten vorgesehenen Füllschläuche 42 zwischen das Rückziehen der Füllschläuche 42 bewirkenden Federelementen 24.2 in einer gefalteten Stellung gehalten. Der nicht benötigte Füllschlauch 42.2 ist dabei stark eingefaltet, sein Füllkopf 43.2 ruht in der Ablage 24.1; der für die zum Betanken des Kraftfahrzeuges 10 benötigte Kraftstoffsorte bestimmte Füllschlauch 42.1 dagegen ist von dem Manipulatorarm ausgezogen und verläuft im wesentlichen gestreckt. Der von nicht näher dargestellten Stellmotoren in Betankungsposition gebrachte Manipulatorarm ist auf einem Drehteller 25 aufgebaut, wobei sein unteres, erstes Armteil 26 mittels eines Gelenkes 25.1 an den Drehteller 25 angelenkt ist. Sowohl der Drehteller 25 als auch der erste Manipulatorarm 26 sind mit entsprechenden Antrieben versehen, wobei der Drehteller 25 um eine Vertikalachse und das angelenkte Armteil 26 um die Horizotalachse des Gelenks 25.1 schwenkbar sind. An den ersten Manipulatorarm 26 ist mit einem ebenfalls um eine Horizontalachse schwenbaren Gelenk 26.1 ein zweites Armteil drehbar oder längsverschiebbar z.B. durch teleskopartige Ausbildung ausziehbar angelenkt, wobei eine entsprechender Antrieb 28 vorgesehen ist. An dem Ende dieses zweiten Armteiles ist das Greifelement 30 vorgesehen, das den Füllkopf 43.1 erfaßt und in den Tankstutzen 14 des Kraftstofftanks 13 des Kraftfahrzeuges eingeführt hat. Dabei ist Voraussetzung, daß die in der Karosserie 11 vorhandene äußere Tankklappe 12 geöffnet ist. Als Antriebsmotoren für die Stellbewegungen eignen sich alle positionierbaren Antriebe, wobei neben den bekannten Stellmotoren auch solche Verwendung finden, deren Bewegung etwa von Sensoren über mit Markierungen versehene Scheiben (Chopperscheiben) oder Linealen aufgenommen und an eine Auswertung weitergeleitet wird, die so die zum Erreichen der notwendigen Position wichtige Information erhält.

An der dem Kraftfahrzeug zugewandten Seite ist ein Fernsensor 29 vorgesehen, der zum einen die Außenfront des Kraftfahrzeuges, insbesondere die Lage der Tankklappe und deren Öffnungszustand überprüft und zum anderen den Schwenkbereich des Manipulatorarmes überwacht. Dieser kann auch bei geeigneter Codierung des Kraftfahrzeuges dessen Typ sowie das Modell erkennen; mit dieser Information werden die Lage des Tankstutzens und die benötigte Kraftstoffsorte aus dem in einer angeschlossenen Recheneinheit abgespeicherten Unterlagen ermittelt und der Manipulatorarm dementsprechend bewegt. Bei einer solchen Codierung kann die Kennungseingabe über die Karte und den Kartenleser entfallen.

Die Figur 6 zeigt eine Einzelheit des Füllkopfes 43. Der den Kraftstoff zuleitende Füllschlauch 42 wird über ein Magnetventil 45, das über einen Anschluß 45.1 mit der steuernden Zentraleinheit verbunden ist, geführt und mündet in den Füllrüssel 47, an dessen Ausströmöffnung eine Überlaufsicherung 47.1 vorgesehen ist. Ein zweiter Schlauch 48 mündet in den Füllkopf 30; dieser Schlauch dient der Rückleitung des beim Füllen des Tankes 13 (Fig. 5) verdrängten, mit Treibstoffdämpfen gesättigten Gases. Dieses Gas wird im allgemeinen als Pendelgas in den Kraftstoff-Vorratstank der Betankungsanlage zurückgeleitet, ein Absaugen ist ebenfalls möglich. Das vollständige Erfassen des während des Betankens aus dem Fahrzeugtank 13 austretenden Gases wird durch einen den Füllrüssel 47 umgebenden Faltenbalg 46 erreicht. Um die automatische Betankung durchführen zu können, ist das Kraftfahrzeug dafür aufzurüsten. Dies geschieht mit einem in dem Tankstutzen 14 eingesetzten Adapter 50, der, dem bisherigen Tankverschluß entsprechend, mit einer Bajonettverriegelung auf den Anschlußkragen 15 des Tankstutzens 14 aufgesetzt wird. Dieser Adapter 50 weist eine ringförmige Auflagefläche 52 auf, die mit dem Frontring des Faltenbalges 46 zusammenwirkt. Ein Führungskonus 53 reicht in das Innere des Tankstutzens 14; dieser Führungskonus ist an seinem freien Ende mit einer inneren Tankklappe 54 verschlossen (gestrichelt: Offenstellung).

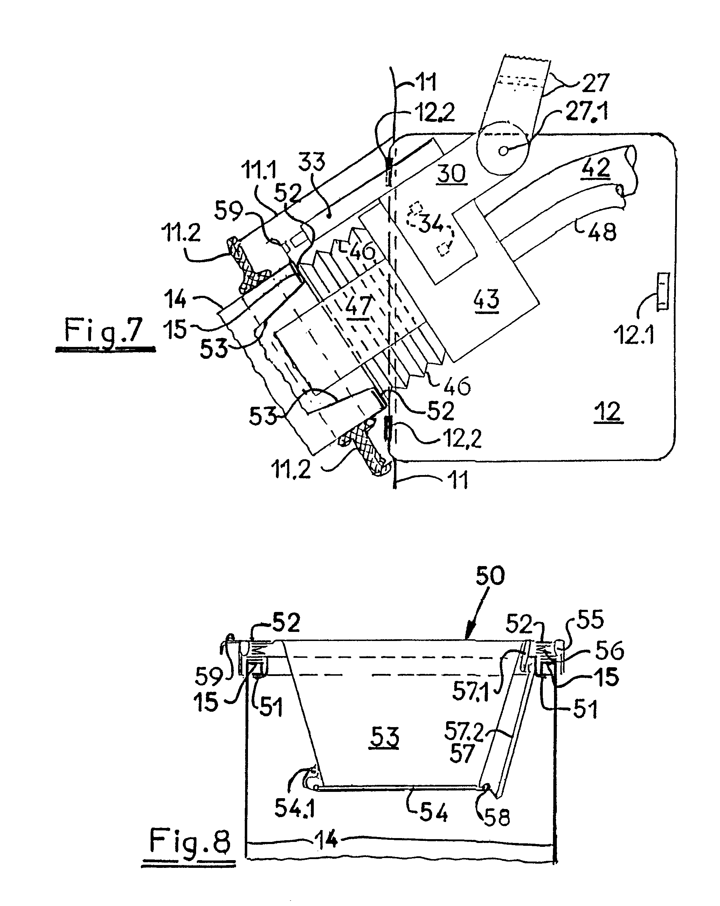

Die Figur 7 zeigt die in Fig. 6 dargestellten Verhältnisse in einer rückwärtigen Ansicht. Der Tankstutzen 14 mündet im allgemeinen im Bereich der Karosserie in einem Winkel; er wird mit einem elastischen Ring 11.2 gegenüber einem nach innen geführten Ansatz 11.1 der Karosserie 11 abgestützt. Die Öffnung in der Karosserie 11 ist aus strömungstechnischen Gründen mit einer äußeren Tankklappe 12, die mit Scharnieren 12.2 an die Karosserie angelenkt ist, verschlossen. Eine Rastverriegelung 12.1, die z.B. vom Fahrersitz aus entriegelt wird, sichert die geschlossene Stellung. Nach der Entriegelung springt diese Tankklappe unter Federwirkung auf; vorteilhaft wird hier auch ein Stellmotor eingesetzt, der vom Fahrersitz aus gesteuert das Öffnen und das Schließen der Tankklappe übernimmt. Der Manipulatorarm - hier lediglich das greifelementseitige Armteil 27 dargestellt - bringt den Füllkopf 30 in betankungsgerechte Stellung, wobei die Frontseite des Faltenbalges 46 auf dem Auflagering 52 des in dem Tankstutzen 14 vorgesehenen Adapters 50 aufliegt. Über den Manipulatorarm wird der Füllkopf 30 und damit auch der Faltenbalg 46 in die Betankungsstellung gedrückt, wobei der Füllrüssel 47 den inneren, mit Federkraft in Schließstellung gehaltenen Tankdeckel 54 des Adapters 50 öffnet (Fig. 6). Zur Kraftstoffzufuhr ist der Füllkopf 43 mit dem Füllschlauch 42, zur Ableitung des Pendelgases mit dem Gasführungsschlauch 48 verbunden. Der Füllkopf 43 wird von dem Greifelement 30 über (gestrichelt dargestellte) Haltenocken gehalten; das Greifelement ist seinerseits über das Gelenk 27.1 an das freie Ende des endständige Armteil 27 des Manipulatorarmes angelenkt. Seitlich an ihm ist ein Nahfeldsensor 33 angeordnet, der in der Lage ist, eine am Adapter 50 angeordnete Codierung 59 zu erkennen und zur Feinpositionierung des Füllkopfes und ggf. zur. Datenübertragung zu lesen.

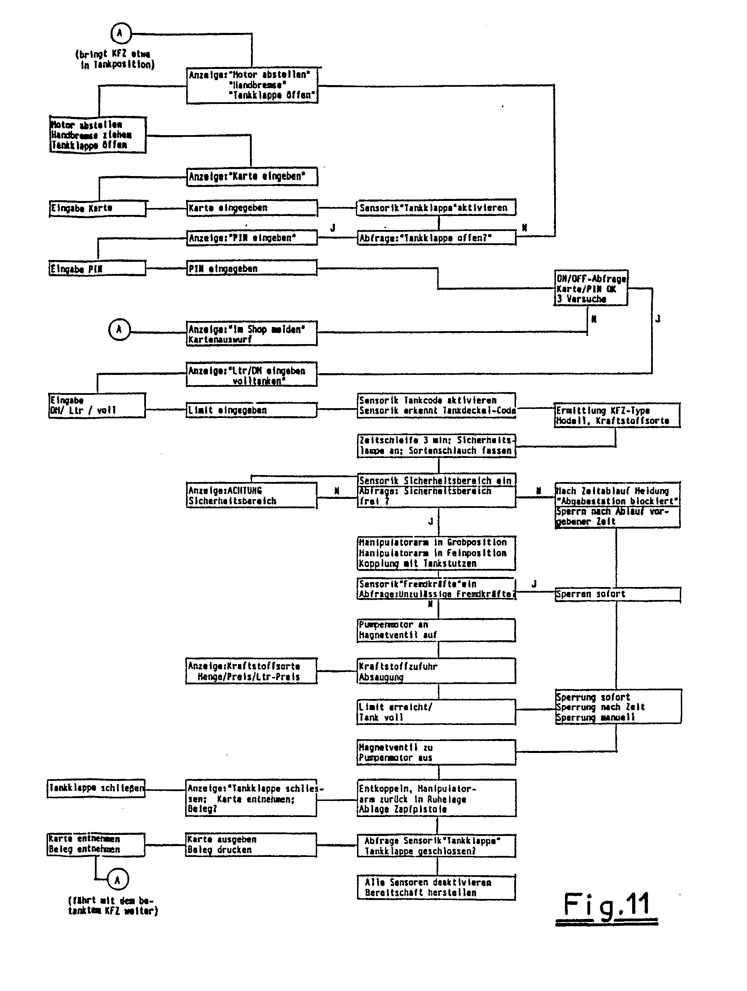

Die Figur 8 zeigt den Adapter 50, der, auf konventionelle Tankstutzen 14 aufgesetzt, diese zum automatischen Betanken einrichtet. Mittels dieses Adapters kann daher auch schon vor einer Konvention zur Anpassung der Tankstutzen an Stationen zur automatische Betankung von Kraftfahrzeugen eine automatische Betankung vorgenommen werden. Auf den Anschlußkragen 15 des Tankstutzens 14 wird der Adapter 50 mit seinen dazu passenden Hintergreifungskragen 51 aufgesetzt und durch Verdrehung festgelegt. In dieser Lage befindet sich der Füllkonus 53 im Inneren des Tankstutzens 14. Der Hintergreifungskragen 51 ist mit dem Auflagering 52 verbunden, wobei der Adapter mit eingelegten Federn 56 gegen den Anschlußkragen 15 des Tankstutzens 14 abgestützt und mittels einer Ringdichtung 55 abgedichtet ist. Die innere Öffnung des Adapters 50 ist mit einer inneren Tankklappe 54 verschlossen, die an den Konus 53 mit einem vorteilhafterweise federbelasteten Scharnier 54.1 angelenkt ist. Über ein aus einem Stössel 57.1 und einem mit diesem zusammenwirkenden Winkelhebel 57.2 gebildetes Getriebe wird die Rastsicherung 58 der innere Tanklappe 54 unter Einwirkung der beim Aufsetzen des Füllkopfes vom Faltenbalg 46 auf den Auflagering 52 übertragenen Kräfte gelöst, der Tankdeckel wird beim Durchstoßen des Füllrüssels 47 des Füllkopfes 43 gegen die Schließkraft der Feder im Scharnier 54.1 geöffnet, und er schließt sich beim Abheben des Füllkopfes aufgrund dieser Schließkraft wieder, wonach die Rastsicherung 58 mittels einer beim Lösen gespannten Feder wiederum eingreift und den inneren Tankdeckel in Schließstellung sichert. Eine seitlich am Auflagering 52 vorgesehene Lasche trägt die tankdeckelseitige Codierung 59, die von dem am Greifelement 30 vorgesehenen Nahfeldsensor 33 erkannt und identifiziert wird. Die Fig. 9 zeigt den Adapter in Aufsicht.

Die Figur 10 zeigt das geöffnet dargestellte Greifelement 30 mit einem Füllkopf 43. Die Haltebacken 31 des Greifelements 30 werden mit symmetrischen Antrieb 32 so gegeneinander verfahren, daß die Haltenocken 34 in die korrespondierenden Ausnehmungen 44 des Füllkopfes 43 eingreifen und diesen so fassen. Als Antrieb dient dazu ein Hydraulikzylinder 32, der von einem Magnetventil 32.1 angesteuert wird, wobei die Vorspannung einer zusätzlichen Feder 32.2 die Haltebacken bei Stromausfall geschlossen hält. Korrespondierend zu der am Adapter 50 vorgesehenen Codierung 59 ist der Nahfeldsensor mit einem Sender 33.1 und einem Empfänger 33.2 versehen, die bereits bei der Annäherung aktiv sind und die Codierung erfassen. Dabei spielt es keine Rolle, ob die Codierung mit akustischen oder mit optischen Mitteln gelesen werden. Sofern die fahrzeugseitige Codierung eine aktive Codierung (z.B. eine digitalisierte Anzeige mit Leuchtdioden) ist, kann auf den Sender 33.1 verzichtet werden. Es versteht sich von selbst, daß der Adapter 50 dann überflüssig wird, wenn die Kraftfahrzeuge mit zur automatischen Betankung geeigneten Tankstutzen versehen sind, und in diesem Fall jedoch noch für das Aufrüsten von Altfahrzeugen und für das Nachrüsten von Importfahrzeugen dienen kann.

In der Figur 11 ist der Verfahrensablauf der automatischen Betankung eines Kraftfahrzeuges an einer mit einem Bedienterminal mit Magnetstreifenkartenleser sowie mit Sensoren an der Abgabeeinheit und an dem Greifelement zur Aufnahme von Berechtigungs- und Fahrzeugkennung ausgerüsteten Betankungsanlage schematisch dargestellt, wobei die Spalten von links nach rechts den Fahrer des Kraftfahrzeuges, das Bedienterminal, die Betankungsanlage mit Abgabeeinheit und die Datenverarbeitung der Betankungsanlage betreffen. Der Fahrer bringt sein Kraftfahrzeug in eine betankungsgerechte Position, die von der Betankungsanlage z.B. durch eine Induktionsschleife erkannt wird und deren Erreichen dem Fahrer durch das Aufleuchten der Anzeige "Motor abstellen", Handbremse" und "Tankklappe öffnen" angezeigt wird; der Fahrer folgt der Anweisung. Die Anzeige wechselt auf "Karte eingeben"; nach der Eingabe der Karte wird zunächst die Sensorik der Abgabeeinheit aktiviert zur Überprüfung, ob die Tankklappe geöffnet ist. Bei negativem Ausgang schaltet die Abgabeeinheit das Bedienterminal zurück auf "Motor abstellen"...; bei positivem Ausgang wird das Sedienterminal auf die neue Anzeige "PIN eingeben" (PIN: Persönliche Identifikationsnummer) geschaltet und der Fahrer zu deren Eingabe aufgefordert. Nach Eingabe der PIN durch den Fahrer erfolgt die Überprüfung der Eingabe in der Datenverarbeitung, wobei bei negativem Ausgang und ggf. zulässigen Wiederholungen der Fahrer nach Auswurf der eingegebenen Karte aufgefordert wird, sich bei dem Bedie nungspersonal zur Klärung zu melden. Bei richtiger Identifizierung wird die Anzeige "Ltr/DM bzw. Volltanken" aktiviert, die den Fahrer auffordert, das Gewünschte einzugeben. Nach der Eingabe wird die den Tankcode erkennende Sensorik aktiviert, die aufgrund der Codierung den Fahrzeugtyp und das Modell erkennt und aus diesen Informationen die benötigte Kraftstoffsorte ermittelt. Die Abgabeeinheit wird daraufhin aktiviert, die Sicherheitslampe eingeschaltet und mit dem Greifelement des Manipulatorarmes der dem benötigten Kraftstoff zugeordnete Füllkopf aufgenommen. Eine Zeitschleife mit kurzer Dauer, beispielsweise von 3 Minuten verhindert einen unerwünschten Dauerbetrieb und nimmt nach Zeitablauf die Aktivierung der Abgabeeinheit zurück. Zusätzlich wird eine Sensorik "Sicherheitsbereich" aktiv, die den Zwischenraum zwischen Fahrzeug und Abgabeeinheit überwacht und eine Bewegung des Manipulatorarmes verhindert, wenn in diesem Raum Hindernisse, z.B. Personen, erkannt werden. Diese Sensorik ist zumindest während des Ausfahrens und während des Einfahrens des Manipulatorarmes aktiv, um zum einen Schäden am Manipulatorarm und zum anderen Personenschäden zu verhindern.

Ist der Sicherheitsbereich als frei erkannt, wird der Manipulatorarm mit Hilfe seiner Antriebe in die dem erkannten Fahrzeugtyp und -modell zugeordnete Tankstutzenposition gebracht, wobei zunächst eine Grobpositionierung und danach eine Feinpositionierung erfolgt und nach Erreichen der korrekten Position der Auslaufstutzen des Füllkopfes in dem mit einem Adaptereinsatz verschlossenen Tankstutzen eingeführt wird. Die danach erreichte Position des Manipulatorarmes ist die Betankungsposition, in der gewisse Kräfte auf den Manipulatorarm einwirken. Übersteigen die Horizontal- oder die Vertikal-Komponente dieser Kräfte vorgegebene Werte, bedeutet dies eine verbotene Horizontal- oder Vertikal-Bewegung des Kraftfahrzeuges, diese Überschreitungen werden von der "Fremdkraftl'-Sensorik als Fremdkräfte erkannt und führen zu einem sofortigen Abbruch der Betankung und zur Sperrung. Diese Sensorik ist während des gesamten Tankvorganges aktiv. In der Betankungsposition werden der Pumpenmotor zugeschaltet und das Magnetventil in dem Füllkopf geöffnet, der Kraftstoff wird in den Tank gefüllt. Während des Betankens wird das aus dem Fahrzeugtank verdrängte Gas über die Gas-Rückführleitung in den Vorratstank überführt. Darüber hinaus ist während des Betankens neben der Angabe über die gewählte Kraftstoffsorte ständig die mitlaufende Anzeige "Menge/Preis - Liter. /Preis" auf der Anzeige des Bedienterminals ablesbar. Ist das vorgegebene Limit erreicht, erfolgt der Abbruch der Betankung und die Sperrung, bei der das Magnetventil des Füllkopfes geschlossen und der Pumpenmotor stillgesetzt werden; danach werden die Antriebe des Manipulatorarmes so aktiviert, daß dieser den Füllkopf aus dem Tankstutzen entnimmt und mit ihm in seine Ruheposition zurückkehrt, und dort diesen in seiner Ablage, aus der er bei Beginn des Vorganges aufgenommen wurde, wieder ablegt und frei gibt. Die Anzeige am Bedienterminal wechselt auf "Tankklappe schließen / Karte entnehmen / Beleg? ". Der Fahrer schließt die Tankklappe und entnimmt dem nun freigegebenen Kartenleser seine Karte. Sofern er einen Beleg wünscht, teilt er dies dem Bedienterminal durch entsprechenden Tastendruck mit und erhält den Beleg ausgedruckt. Mit der Entnahme der Magnetkarte bzw. mit dem Ausdruck des Belegs ist der Betankungsvorgang abgeschlossen, alle vorgesehenen Sensoren bis auf denjenigen, der erkennt, ob ein Fahrzeug auf der Fahrspur der Abgabeeinheit etwa betankungsgerecht abgestellt wird, werden desaktiviert und die Betankungsanlage geht wieder in Bereitschaft, um den nächsten Betankungsvorgang zu erledigen. Es versteht sich von selbst, daß bei Betankungsanlagen mit mehreren Abgabeeinheiten die vorbeschriebenen Abläufe bei den einzelnen Abgabeeinheiten parallel ablaufen können, wenn auch lediglich eine Betankungsanlage mit Datenverarbeitung vorgesehen ist. Es versteht sich weiter von selbst, daß die Zuordnung eines eingesetzten Bedienterminals zu lediglich einer Abgabeneinheit nicht notwendig ist, daß vielmehr z.B. bei sofortiger Rückgabe der Karte nach OK-Befund ein Bedienterminal mehrere Abgabeeinheiten zu versorgen in der Lage ist. Dabei bleiben die Vorteile der automati schen Betankung erhalten, wenn die Karteneingabe und Kartenprüfung vor dem Abstellen der Fahrzeuge in betankungsgerechter Position erfolgt und der Fahrer nach der Freigabe der gewählten oder zugewiesenen Abgabeeinheit sein Fahrzeug in der Fahrspur dieser Abgabeeinheit in geforderter Position abstellt. Die dann darauf ausgelegte Sensorik erkennt dann Fahrzeugtyp und -modell und der Vorgang läuft dann von dieser Ablaufsposition wie vorbeschrieben ab.

## Ansprüche

01. Verfahren zur Betankung von grobpositioniert auf der Fahrspur einer Betankungsanlage befüllungsgerecht abgestellten Fahrzeugen, wobei die Betankungsanlage für jede vorrätige Kraftstoffsorte mindestens eine Abgabeeinheit mit einen für diese Kraftstoffsorte bestimmten Füllschlauch mit angeschlossener, in einer Ablage abgelegter, zur Benutzung entnehmbarer Zapfpistole aufweist und mit Mitteln zum Erkennen zumindest der Tankberechtigung versehen und an eine Rechnereinheit angeschlossen ist, **dadurch gekennzeichnet,**
-daß der Betankungsanlage über die Berechtigungskennung des Tankenden hinaus die Fahrzeugkennung mit mindesten Angabe zur Art des gewünschten Kraftstoffes und zur Lage des Tankstutzens der Rechnereinheit und mit der Fahrzeugkennung auch Angaben zur Berechtigung des Tankenden an die Rechnereinheit übermittelt wird, die diese prüft und nach positivem Befund die Betankung über die Abgabeeinheit frei gibt, und die die Tankabrechnung erstellt und vorzugsweise durch Fernübertragung einer zentralen Abrechnungsstelle übermittelt,
-daß danach ein an diese Abgabeeinheit angeschlossener Manipulator mit schwenkbarem Gelenkarm aus einer Ruhelage heraus die für die Betankung mit dem geforderten Kraftstoff bestimmte, als Füllkopf ausgebildete Zapfpistole aus ihrer Ablage aufnimmt, in eine der Lage des Tankstutzens entsprechende Lage verbringt und in den mit einem öffenbaren Verschluß versehenen Tankstutzen einführt, worauf die Abgabeeinheit ein Signal zum Öffnen des Betankungsventils erhält,
-daß nach Füllung des Tankes die Abgabeeinheit ein die Kraftstoffzufuhr beendendes Signal erhält, das seinerseits die rückläufige Bewegung des Manipulators auslöst, worauf der Manipulator den Füllkopf aus dem Tankstutzen entnimmt, in Ausgangslage zurückverbringt und in der ihr zugeordneten Ablage ablegt und selbst in Ruhelage zurückkehrt,
-daß die Betankung nach einem einstellbaren Zeitintervall abgebrochen wird, wenn die Zapfpistole nicht in den Tankstutzen eingeführt werden kann, der Kraftstoff-Fluß nicht einsetzt oder eine sonstige Störung von der Abgabeeinheit erkannt wird.
02. Verfahren nach Anspruch 1, **dadurch gekennzeichnet,** daß der an die Abgabeeinheit angeschlossene Manipulator mit seinem schwenk- und knickbaren Arm die der benötigten Kraftstoffsorte entsprechenden Zapfpistole erfaßt, in den Bereich des Tankstutzens des zu betankenden Fahrzeugs verbringt und diese so positionierte Zapfpistole der Abgabeeinheit mittels eines zweiten, zwischen Tankstutzen und Zapfpistole bzw. Greifelement ausgetauschten Signals, das nach Umformung als Steuersignal der Antriebssteuerung des Armes zugeleitet wird, feinpositioniert und in den Tankstutzen eingeführt wird, wobei vorzugsweise ein erster Fernsensor an der Abgabeeinheit die Außenwand der Fahrzeugkarosserie abtastet, prüft, ob die den Tankverschluß abdeckende Klappe geöffnet und der Tankstutzen mit einer Fahrzeugkennung versehen ist, diese abliest und der Rechneranlage weiterleitet, die ihrerseits daraus die Angaben zum Fahrzeug übernimmt und der Abgabeeinheit die Angaben zu der benötigten Kraftstoffsorte sowie Angaben zur Lage des Tankstutzens übermittelt.
03. Verfahren nach Anspruch 1 oder 2, **dadurch gekennzeichnet,**
daß ein auf mindestens ein Kraftmoment ansprechender mechanischer Sensor das vom Fahrzeug auf den Manipulatorarm übertragene Kraftmoment aufnimmt und bei Überschreitung eines einstellbaren Grenzwertes den Tankvorgang abbricht, wobei vorzugsweise die von den mechanischen Sensoren übernommenen Kraftmomente denen einer horizontalen, in Richtung der Fahrspur und einer vertikalen, auf den Manipulatorarm rückwirkenden Kraft entsprechen.
04. Verfahren nach einem der Ansprüche 1 bis 3, **dadurch gekennzeichnet,** daß bei Ausfall der Energieversorgung der Betankungsanlage oder einer ihrer Abgabeeinheiten die Betankung mittels einer Notstromversorgung abgebrochen und der Manipulatorarm in Ruhelage zurückgeführt wird, wobei vorzugsweise zur Zurückführung des Manipulatorarmes ganz oder teilweise mechanische Energie in Form von Lageenergie oder Federenergie eingesetzt wird.
05. Verfahren nach einem der Ansprüche 1 bis 4, **dadurch gekennzeichnet,** daß ein Umgebungssensor die Bewegung des Manipulatorarmes unterbricht, wenn er einen im Sicherheitsbereich vorhandene oder eindringenden Fremdkörper erkennt, wobei vorzugsweise der erste Sensor als Umgebungssensor arbeitet.

06. Vorrichtung zum Betanken von Fahrzeugen nach dem Verfahren gemäß einem der Ansprüche 1 bis 5, mittels einer mit mindestens einem vorzugsweise unterirdischen Vorratstank für jede vorrätig gehaltene Kraftstoffsorte versehenen Betankungseinrichtung mit mindestens einer Abgabestelle für jede Kraftstoffsorte mit Pumpwerk, Durchflußzähler und einem mit einer Zapfpistole abgeschlossenen Zapfschlauch, wobei der Zapfschlauch zur Benutzung ausziehbar und die nicht benutzte Zapfpistole in einer Ablage abgelegt ist und daraus zur Benutzung entnehmbar ist, wobei die Betankungsanlage mindestens eine Fahrspur für das zu betankende Fahrzeug sowie mindestens eine Abgabeeinheit an der/den Fahrspur/-en aufweist und wobei an der Betankungseinrichtung Mittel zur Aufnahme von Kundendaten vorgesehen sind, **gekennzeichnet durch**

-einen neben der Fahrspur (18) der Abgabestation (20) vorzugsweise parallel zur Fahrspur verfahrbar angeordneten Manipulator mit

- einen zumindest zweiteiligen, faltbaren, im ausgefalteten Zustand ausladenden Manipulatorarm (26,27), der zumindest um eine Vertikalachse schwenkbar auf den Manipulator aufgesetzt ist und dessen Armteile (26;27) um horizontale Schwenkachsen schwenkbar an die mit dem Manipulator zusammenwirkende Grundplatte (25) bzw. aneinander ge)enkt sind, wobei die Schwenkgelenke mit Antriebsmotoren versehen sind,

-ein Greifelement (30), das an das freie Ende des endständigen Armteils (27), um eine etwa in Richtung dessen Achse weisende Schwenkachse schwenkbar angelenkt ist, und das an seinem freien Ende mit Mitteln zum Greifen und Aufnehmen einer der als Füllkopf (43) ausgebildeten Zapfpistolen aus einer Ablage (42.1) versehen ist, wobei zumindest die Mittel zum Ergreifen des Füllkopfes (43) mit einem Antrieb (32) versehen sind.

07. Vorrichtung nach Anspruch 06, **dadurch gekennzeichnet,**

-daß der Füllkopf (43) ein mit dem Tankstutzen (14) bzw. dem darin angeordneten Adapter (50) zusammenwirkendes Endstück vorzugsweise mit einem Faltenbalg (46) aufweist, das dicht auf den Tankstutzen (14) bzw. den Adapter (50) aufsetzbar ist, und daß an das Endstück eine das Pendelgas übernehmende, dieses zum Vorratstank zurück leitende Ausgleichsleitung (48) angeschlossen ist.

08. Vorrichtung nach Anspruch 6 oder 7, **dadurch gekennzeichnet,** daß das Greifelement (30) in Richtung der Längsachse des endständigen Armteils (27) verschiebbar angeordnet ist, wobei die Längsverschiebung vorzugsweise mittels eines Antriebs (28.1) ausführbar ist, wobei vorzugsweise das Greifelement (30) um eine etwa in Richtung der Längsachse des endständigen Armteils (27) drehbar ausgebildet ist und die Drehung mit einem weiteren Antriebs ausführbar ist.

09. Vorrichtung nach einem der Ansprüche 6 bis 8, **dadurch gekennzeichnet,** daß auf mindestens einer Seite jeder der Fahrspuren (18) der Betankungsanlage, vorzugsweise jeder der Abgabestationen (20) ein Bedienterminal (37) mit Mitteln zur Aufnahme der Fahrer- und Fahrzeugkennung neben der Berechtigungskennung vorgesehen ist, vorzugsweise in einer derartigen Position, daß der Fahrer eines betankungsgerecht grobpositioniert abgestellten Fahrzeugsb die Eingabekonsole durch das fahrerseitige Fahrzeugfenster bedienen kann.

10. Vorrichtung nach einem der Ansprüche 6 bis 9, insbesondere zur Betankung von mit einer akustisch oder optisch abtastbaren Kennung im Bereich des Tankstutzens versehener Fahrzeuge, dadurch gekennzeichnet, daß die Abgabeeinheit mit einem ersten Fernsensor (29) mit einem Geber und mindestens einem dazu korrespondierenden Empfänger zumindest zum Erkennen der Fahrzeugposition und der Lage des Tankstutzens sowie ggf. Lesen der Fahrzeugkennung, und daß das freie Ende des Manipulatorarmes (27), das Greifelement (30) oder der Füllkopf (43) einen zweiten Nahfeldsensor (33) mit mindestens einem Empfänger (33.2) zum Lesen einer am Tankstutzen vorgesehenen Codierung (59) versehen sind, wobei vorzugsweise der erste Fernsensor (29) einen Weitwinkel-Erfassungsbereich und der zweite Nahfeldsensor (33) einen Engwinkel-Erfassungsbereich aufweisen.

11. Vorrichtung nach Anspruch 10, **dadurch gekennzeichnet,** daß zumindest einer der Geber des Fernsensors (29) oder des Nahfeldsensors (33), vorzugsweise der des Fernsensors (29) ein Schallgeber und der dazu korrespondierende Empfänger mindestens ein Aufnahmemikrofon, vorzugsweise drei längs der Fahrspur (18) angeordneter Aufnahmemikrofone aufweist, und wobei Geber und Empfänger vorzugsweise im Ultraschallbereich arbeiten.

12. Vorrichtung nach Anspruch 10 oder 11, **dadurch gokennzeichnet,** daß der zweite Nahfeldsensor (33) ein zum Erkennen optischer Muster z.B. geometrisch angeordneter Leuchtdioden oder Strich-Code ausgebildeter optischer Sensor ist, wobei der mit dem zweiten Nahfeldsensor (33) zusammenwirkende Geber (33.1) vorzugsweise eine als Laserdiode ausgebildete Lichtquelle aufweist und mit einem Schwing- oder Drehspiegel zur Strich-Code-Abtastung versehen ist.

13. Vorrichtung zur Betankung von mit einer Einrichtung zur drahtlosen Kennungsübertragung versehenem Fahrzeug nach einem der Ansprüche 6 bis 12, **dadurch gekennzeichnet,** daß die Betankungseinrichtung mit einem Empfänger für die drahtlos übertragene Kennung mindestens für Fahrzeug und Fahrer versehen ist, die über die Rechnereinheit mit den Abgabeeinheiten (22) verbunden ist, zur Weiterleitung der aufgenommene Kennung an die von dem zu betankenden Fahrzeug (10) angefahrene Abgabeeinheit (20).

14. Vorrichtung nach einem der Ansprüche 6 bis 13, **dadurch gekennzeichnet,** daß der Antriebsmotor zum Schwenken des Manipulatorsarmes (26,27) um die Vertikalachse des Gelenks (25.1) der Manipulator-Grundplatte (25) über ein Ritzel mit einem Zahnkranz eines vorzugsweise selbsthemmenden Getriebes zusammenwirkt.

15. Vorrichtung nach einem der Ansprüche 6 bis 14, **dadurch gekennzeichnet,** daß die als Elektromotore, vorzugweise als Stellmotore ausgebildeten Antriebsmotoren zum Schwenken der Armteile (26; 27) in den sie verbindenden Gelenken (26.1) gegeneinander, zum Schwenken des Greifelements (30) im Gelenk (27.1) gegenüber dem letzten Armteil (27) und ggf. zum Längsverschieben des Greifelements über den Längsantrieb (28) über vorzugsweise selbsthemmende Getriebe mit den jeweils zugeordnenen Armteilen (26;27) bzw. dem Greifelement (30) zusammenwirken.

16. Vorrichtung nach Anspruch 15, **dadurch gekennzeichnet,** daß die Abtriebswellen der Elektromotoren je eine Chopperscheibe und mit der Chopperscheibe zusammenwirkende, die Anzahl der Unterbrechungen bzw. der Durchgänge zählende und mit dem Ergebnis der Zählung die erreichte Position bestimmende Mittel aufweist.

17. Vorrichtung nach einem der Ansprüche 6 bis 14, **dadurch gekennzeichnet,** daß die als hydraulische, vorzugsweise fein-positionierbare Antriebe ausgebildete Antriebsmotoren zum Schwenken der Armteile (26; 27) in den sie verbindenden Gelenken (26.1) gegeneinander, zum Schwenken des Greifelements (30) im Gelenk (27.1) gegenüber dem letzten Armteil (27) und ggf. zum Längsverschieben des Greifelements über den Längsantrieb (28) über vorzugsweise selbsthemmende Getriebe mit den jeweils zugeordnenen Armteilen (26;27) bzw. dem Greifelement (30) zusammenwirken.

18. Vorrichtung insbesondere nach einem der Ansprüche 15 bis 17, **dadurch gekennzeichnet,** daß der Manipulator bzw. der Manipulatorarm (26, 27) mit Kraftsensoren zumindest für die horizontale Kraftkomponente, vorzugsweise auch für die vertikale Kraftkomponente versehen ist.

19. Vorrichtung nach einem der Ansprüche 6 bis 18, **dadurch gekennzeichnet,** daß das Greifelement (30) eine formschlüssig mit dem Füllkopf (43) zusammenwirkende Aufnahme sowie Mittel für eine mechanische Verbindung vorzugsweise in Form von mit Ausnehmungen (44) im Füllkopf (43) zusammenwirkenden Haltenocken (34) aufweist, wobei die mechanische Verbindung mittels eines symmetrischen Antriebes, vorzugsweise mit einem hydraulischen, gegen eine Feder (32.2) arbeitenden Zylinder (32) herstell- und lösbar ist.

20. Vorrichtung nach Anspruch 19, **dadurch gekennzeichnet,** daß die mechanische Verbindung mittels rastender Mittel sicherbar ist, deren Ver- bzw. Entrastung vorzugsweise ferngesteuert herstell- oder aufhebbar ist.

Fig.1

Fig.2

Fig.3

Fig.5

Fig.9

Fig.4

Fig.10

Fig.6

Fig.7

Fig.8

(A)

(bringt KFZ etwa
in Tankposition)

Anzeige:"Motor abstellen"
"Handbremse"
"Tankklappe öffen"

Motor abstellen
Handbremse ziehen
Tankklappe öffen

Anzeige:"Karte eingeben"

Eingabe Karte | Karte eingegeben | Sensorik"Tankklappe"aktivieren

J

Anzeige:"PIN eingeben" | Abfrage:"Tankklappe offen?" | N

Eingabe PIN | PIN eingegeben

ON/OFF-Abfrage
Karte/PIN OK
3 Versuche

(A) | Anzeige:"Im Shop melden"
Kartenauswurf

N

J

Anzeige:"Ltr/DM eingeben
volltanken"

Eingabe
DM/ Ltr / voll | Limit eingegeben | Sensorik Tankcode aktivieren
Sensorik erkennt Tankdeckel-Code | Ermittlung KFZ-Type
Modell, Kraftstoffsorte

Zeitschleife 3 min; Sicherheitslampe an; Sortenschlauch fassen

Anzeige:ACHTUNG
Sicherheitsbereich | N | Sensorik Sicherheitsbereich ein
Abfrage: Sicherheitsbereich
frei ? | N | Nach Zeitablauf Meldung
"Abgabestation blockiert"
Sperren nach Ablauf vorgebener Zeit

J

Manipulatorarm in Grobposition
Manipulatorarm in Feinposition
Kopplung mit Tankstutzen

Sensorik"Fremdkräfte"ein
Abfrage:Unzulässige Fremdkräfte? | J | Sperren sofort

N

Pumpenmotor an
Magnetventil auf

Anzeige:Kraftstoffsorte
Menge/Preis/Ltr-Preis | Kraftstoffzufuhr
Absaugung

Limit erreicht/
Tank voll | Sperrung sofort
Sperrung nach Zeit
Sperrung manuell

Magnetventil zu
Pumpenmotor aus

Tankklappe schließen | Anzeige:"Tankklappe schliessen; Karte entnehmen;
Beleg? | Entkoppeln, Manipulatorarm zurück in Ruhelage
Ablage Zapfpistole

Karte entnehmen
Beleg entnehmen | Karte ausgeben
Beleg drucken | Abfrage Sensorik"Tankklappe"
Tankklappe geschlossen?

(A)

Alle Sensoren deaktivieren
Bereitschaft herstellen

(fährt mit dem betankten KFZ weiter)

# Fig.11